# EUROPEAN PATENT SPECIFICATION

(11) **EP 2 192 756 B1**
(45) Date of publication and mention of the grant of the patent: **30.08.2017**
(21) Application number: 08291130.6
(22) Date of filing: 28.11.2008
(51) Int. Cl.: H04M 3/54, H04M 3/42

(54) **CONTEXT-AWARE CALL FORWARDING SYSTEM**
KONTEXTBEWUSSTES RUFWEITERLEITUNGSSYSTEM
SYSTÈME DE TRANSFERT D'APPELS SENSIBLE AU CONTEXTE

(43) Date of publication of application: 02.06.2010
(73) Proprietor: ALCATEL LUCENT, 92100 Boulogne-Billancourt (FR)
(72) Inventor: De Mondt, Hans, 2960 Brecht (BE); Touchard, Vincent, 2850 Boom (BE); Bruynooghe, Bert, 9050 Gentbrugge (BE); Moons, Jan Lode Mia, 2220 Heist-op-den-Berg (BE)
(74) Representative: Berthier, Karine

(56) References cited:
- US-A1- 2006 072 726

## Description

The present invention relates to a telecommunication system comprising a telecommunication network coupled to a plurality of telecommunication devices adapted to receive incoming calls, said telecommunication network including a call forwarding module adapted to redirect an incoming call intended to a first device of said plurality towards a second device of said plurality of telecommunication devices,
said telecommunication system further comprising a decision logic coupled to said call forwarding module and to a context-aware module associated to said first device,
said context-aware module being adapted to retrieve contextual information from the context wherein said first device is,
said decision logic comprising a decision module adapted to receive context parameters from said context-aware module and to decide therewith whether and to which second device of said plurality of telecommunication devices said incoming call should be redirected, and
said decision logic further comprising an action module adapted to control said call forwarding module to redirect said incoming call towards said second device of said plurality of telecommunication devices.

Call forwarding (or call diverting) in a telecommunication system is a feature on a telecommunication network that allows an incoming call to a called party, or first device, which would be otherwise unavailable, to be redirected to another mobile or fixed phone, or second device. Usually, the forwarded called party rings once, to remind that calls are being redirected.

With the currently known call forwarding systems, generally performed by the call forwarding module in the telecommunication network, every time the user of the first device wants to redirect incoming calls, he explicitly has to turn on the call forwarding function on this first device and has to input the phone number or identity of the second device to which the incoming calls should be redirected. The same applies for disabling incoming call redirection: the user has to explicitly take some action to turn off the call forwarding function.

A drawback of the current implementation of call forwarding is that the user isn't always able to change these settings because he is in a certain situation where he cannot turn call forwarding on. This occurs when the user is for instance driving a car or when he is unaware that the battery of his phone is getting flat. The user may also forget to turn call forwarding off.

An object of the present invention is to provide a context-aware telecommunication system wherein an incoming call to a called party or first telecommunication device will be automatically redirected or forwarded to another party or second device according to the context or environment wherein the user of the first device is.

According to the invention, this object is achieved due to the fact that
said decision module is provided with contextual knowledge database containing information associated to distinct devices of said plurality of telecommunication devices and is adapted to map the context parameters received from said context-aware module onto said contextual knowledge database and to derive thereof the identity of said second device, and that, when said context parameters can not be mapped by the decision module onto said contextual knowledge database, said action module is adapted to request additional information to said first device.

In this way, the call forwarding is not only automatically configured to redirect an incoming call formerly intended to the first device towards a second device chosen in function of the context wherein the user of the first device is at that time. Moreover, the forwarding is no longer linked to a single second device for receiving the incoming calls intended to the first device. An incoming call may be redirected to a different second device in function of the context or environment wherein the first device is or, when the context of the first device is unknown, the user of this first device is informed of this situation by receiving a request for additional information and may then decide to forward the incoming call or not.

It is to be noted that the US 2006/072726 A1 (KLEIN MARK D [US] et al) of 6 April 2006 and entitled "Wireless device to manage cross-network telecommunication services" also discloses a telecommunication system of the above known type. Therein, a communication remote control system allows a user to remotely configure call management functions across various phone networks using a client device. The communication remote control system centrally handles call management for the user's telephones. The communication remote control system may provide a centralized address book, call log, and voicemail. The user can specify various parameters including modes, filters, schedules, and the like, which are stored in the communication remote control system. The communication remote control system routes incoming calls made to the phone networks to the user's delivery device, which may be part of the client device. Incoming calls are routed to a specified telephone number, sent to voicemail, or otherwise disposed of or users can change modes manually or can specify automatic mode selection based on time of date, day of week, location, and/or other factors.

However, in this known document, nothing is mentioned nor teached on how to handle the call when the context parameters can not be mapped, e.g. by the decision module, onto a contextual knowledge database, which problem is advantageously solved by the present invention.

In a preferred characterizing embodiment of the present invention the context-aware module associated to said first device is adapted to reply to the request for additional information of said action module by sending context parameters to said decision module.

When the context of the first device is unknown, the additional information provided by this first device to the decision module under the form of context parameters will allow the decision logic to control a call forwarding anyway.

Also another characterizing embodiment of the present invention is that said decision module is adapted to update said contextual knowledge database with the context parameters received from said action module.

At the beginning, the system and more particularly the decision logic thereof has to learn the different contexts of the first device, so there will be some manual intervention by the user to provide the additional information.

After some time the user doesn't have to tell the decision logic anymore that it has to forward or not incoming calls to another device. The call forwarding will be configured automatically by the contextual information transmitted by the context parameters to the decision logic.

The system is fully autodidactic and the user involvements are minimized due to the existence of default mappings between contexts and actions of the decision logic.

Further characterizing embodiments of the present telecommunication system with a context-aware call forwarding system are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

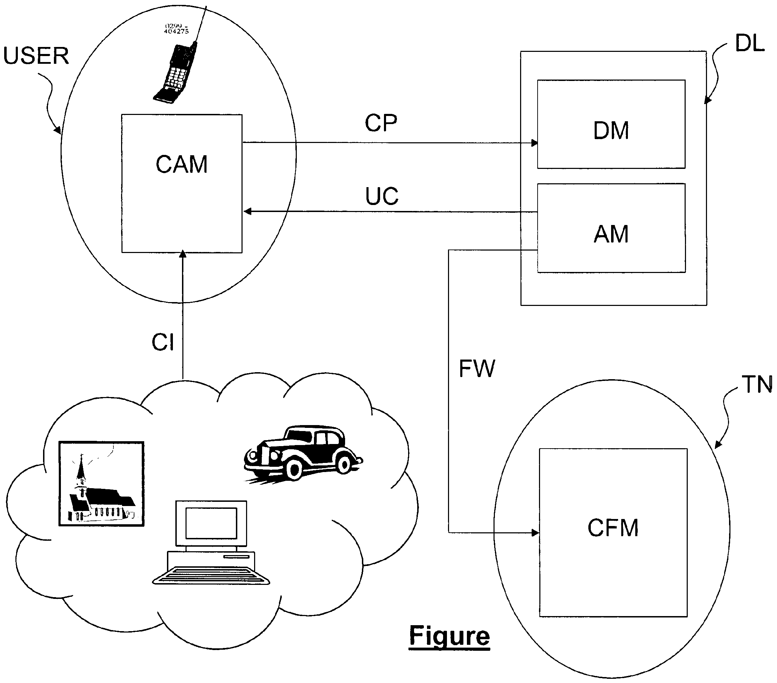

The above and other objects and features of the invention will become more apparent and the invention itself will be best understood by referring to the following description of an embodiment taken in conjunction with the accompanying drawings wherein the single Figure represents telecommunication system with a context-aware call forwarding system.

The telecommunication system represented on the Figure comprises a telecommunication network TN coupled to several telecommunication devices, of which only one, labeled USER, is shown. This telecommunication system is provided with a context-aware call forwarding system that automatically configures call forwarding when a user, or more particularly the device or phone USER used by this user, is in a particular context, as will become clear from examples given later.

Each telecommunication device or phone of the telecommunication system may receive incoming calls formerly intended to the user of the phone USER. To this end, the telecommunication network TN includes a call forwarding module CFM which is adapted to redirect an incoming call formerly intended to the phone USER towards another device or phone of the telecommunication system.

The telecommunication system also comprises a decision logic DL coupled to the call forwarding module CFM and to a context-aware module CAM associated to or preferably located in the device or phone USER itself.

The context-aware module CAM is able to figure-out the context the user or his telephone is in by retrieving contextual information CI from this context or environment. Examples of context are: the user is driving a car, the battery of the phone is almost empty, the user is in a meeting, etc. The module CAM may also be able to access other context-aware modules on other devices to provide a better context.

The contextual information CI is transmitted as corresponding context parameters CP to a decision module DM forming part of the decision logic DL.

The decision logic DL comprises the decision module DM and an action module AM and is associated to or located in either the device USER or the telecommunication network TN.

When the decision module DM receives the context parameters CP from the context-aware module CAM, it decides therewith whether an incoming call has to be forwarded or not.

In case the call has to be forwarded, the decision module DM further decides to which other device this incoming call, formerly intended to the device USER, should be redirected.

The action module AM actually turns call forwarding on/off by controlling FW the call forwarding module CFM of the telecommunication network TN to redirect the incoming call towards the other device. In case the decision module DM has found an unknown context, this module AM asks the user what to do with it.

The call forwarding module CFM in the telephone network TN is responsible that incoming phone calls will be redirected to a phone number decided by the decision logic DL and set/unset by the action module AM.

More details of the architecture of the present telecommunication system will be given after the examples of applications below.

In a first example, the user of the device or phone USER shares every morning his car with a colleague when driving to work. When the user is at the driver's seat he is not able to pick up the phone but his colleague passenger can. When this context is detected, the call forwarding is automatically turned from the user's phone to the phone of his colleague passenger.

In a second example, when the battery of the device or phone USER is almost empty, the phone tries to detect if there are other phones nearby that are listed in the user's phonebook. If there is, the call forwarding is automatically turned on to the closest "known" phone.

In a third example, suppose that the user just concluded an important meeting with customers and that during the meeting all calls were forwarded to the user's secretary. After exiting the meeting room, the phone USER automatically turns off call forwarding since the user then becomes available.

The architecture of the present telecommunication system which allows to automatically configure call forwarding when the user is in a particular context as mentioned above will be described in more detail below.

The context-aware module CAM is the means on the telephone USER that is used to gather the context of the user or his phone. On current cellular phones there are different types of (network) interfaces available:
- GSM network, GPRS, UMTS;
- WiFi;
- Bluetooth;
- Infrared;
- GPS;
- RFID reader.

These interfaces are used, in combination or separate, by the context-aware module CAM to gather the context.

For instance, with reference to the first example above, if the context-aware module CAM of the phone USER is able to find the user's Bluetooth enabled car stereo and his colleague's phone, the decision logic DL derives therefrom that the user is carpooling with this colleague. The context-aware module CAM will then send corresponding context parameters CP relating to the car stereo and colleague's phone to the decision module DM of the decision logic DL.

The decision module DM of the decision logic DL is provided with a contextual knowledge database containing information associated to distinct devices and is adapted to map the context parameters CP received from the context-aware module CAM onto this contextual knowledge database in order to derive thereof the identity of another or second device As a result, besides only getting info from the interfaces mentioned above, the context-aware application, which is the cooperation between the context-aware module CAM, its environment or context and the content of the contextual knowledge database, is also able to augment the contextual knowledge by tapping into various application that belong to the user on that phone, or nearby PDA, PC, etc.

Contextual knowledge can be retrieved from:
- Electronic calendars;
- Address books;
- Task/To-do lists;
- Electronic Program Guide;
- Messenger applications;
- Games;
- GPS software.

If, for instance, the phone USER is able to connect to its user's PDA (e.g. through Bluetooth), the context-aware application can query different applications on the PDA (calendar, to-do list, etc.). From this query it gets the response that the user should be in a meeting at this particular moment.

It is to be noted that a way for retrieving such information is for instance already disclosed in the European Patent Application EP-A1-1801743 entitled "System and method for calendar presence retrieval", filed on 02.11.2006 (US-286893 Priority of 23.11.2005).

To complete the above example, a RFID reader at the back of a GSM is able to read a RFID tag attached to the desk of the meeting. The tag indicates that this is a desk belonging to meeting room, e.g., A7-1-23. The context-aware application then gets information about other phones present at that time in the same meeting room. The phone USER will then send info about the meeting, the desk and the other phones to the decision logic DL, which will act upon it accordingly.

As already mentioned, the decision logic DL, which could run on the phone itself or even in the network, consists of two modules: a decision module DM and an action module AM. The decision module DM inspects the data it receives from the context-aware module CAM and determines if call redirection should be turned on or not or that even extra input from the user is required to identify new contextual information.

If the decision module DM receives context parameters CP from the context-aware module CAM which it can map onto contextual knowledge it knows about, it tells the action module AM to configure call forwarding. If, after some time, the decision module DM gets new context parameters CP which could be mapped onto the contextual knowledge database telling that the state of call forwarding should be turned off, the decision module DM tells the action module AM to turn off the call forwarding.

The decision module DM is thus adapted to detect changes in the context parameters CP received from the context-aware module CAM. Based on these changes detection, the decision module DM decides whether the actual redirection of the incoming call to a second device should be maintained or not.

If the actual redirection is no longer needed, the action module AM controls, via a link FW, the call forwarding module CFM to stop the redirection of the incoming call.

When the decision module DM isn't able to map the context parameters CP it gets, the decision module DM will tell it to the action module AM. The action module AM then requests, via a link UC to the context-aware module CAM, additional information to the user.

The user of the phone USER is informed of this situation by receiving this request for additional information under the form of a message displayed on his phone and asking to help for recognizing the new context. The user decides to forward the incoming call or not. In case of the first example, the user could reply with the term "carpooling" together with the "phone number" of the colleague passenger.

This additional information provided by the user to the action module AM is sent as context parameters CP to the decision module DM.

The context parameters CP allow the decision logic DL to again control the call forwarding by updating the contextual knowledge database.

So the next time the decision logic DL gets this information about the car and the colleague's phone it knows it has to tell the action module AM to turn on call forwarding.

At the beginning, the system and more particularly the decision logic DL thereof has to learn the different contexts of the device USER, so there will be some manual intervention by the user to provide the additional information.

After some time the user doesn't have to tell the decision logic DL anymore that it has to forward or not incoming calls to another device. The call forwarding will be configured automatically by the contextual information CI transmitted by the context parameters CP to the decision logic DL.

The system is fully autodidactic and the user involvements are minimized due to the existence of default mappings between contexts and actions of the decision logic DL.

As already mentioned, the action module AM controls the telephone network TN, and more particularly the call forwarding module CFM thereof. The call forwarding module CFM has the logic to actually turn on/off the call forwarding feature and, if any, to redirect an incoming call formerly intended to the phone USER towards another device of which the identity is indicated by the decision logic DL via the action module AM.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A telecommunication system comprising a telecommunication network (TN) coupled to a plurality of telecommunication devices adapted to receive incoming calls, said telecommunication network including a call forwarding module (CFM) adapted to redirect an incoming call intended to a first device (USER) of said plurality towards a second device of said plurality of telecommunication devices,
said telecommunication system further comprising a decision logic (DL) coupled to said call forwarding module (CFM) and to a context-aware module (CAM) associated to said first device (USER),
said context-aware module (CAM) being adapted to retrieve contextual information (CI) from the context wherein said first device is,
said decision logic (DL) comprising a decision module (DM) adapted to receive context parameters (CP) from said context-aware module and to decide therewith whether and to which second device of said plurality of telecommunication devices said incoming call should be redirected, and
said decision logic further comprising an action module (AM) adapted to control (FW) said call forwarding module to redirect said incoming call towards said second device of said plurality of telecommunication devices,
***characterized in that*** said decision module (DM) is provided with a contextual knowledge database containing information associated to distinct devices of said plurality of telecommunication devices and is adapted to map the context parameters (CP) received from said context-aware module (CAM) onto said contextual knowledge database and to derive thereof the identity of said second device,
***and in that,*** when said context parameters (CP) can not be mapped by the decision module (DM) onto said contextual knowledge database, said action module (AM) is adapted to request (UC) additional information to said first device (USER).

2. The telecommunication system according to claim **1, *characterized in that*** said decision module (DM) is further adapted to detect changes in the context parameters (CP) received from said context-aware module (CAM) and to decide therewith whether the redirection of said incoming call should be maintained or to which third device of said plurality of telecommunication devices said incoming call should be redirected.

3. The telecommunication system according to claim **2, *characterized in that*** said action module (AM) is adapted to control (FW) said call forwarding module (CFM) to stop the redirection of said incoming call when said decision module (DM) has decided that the redirection of said incoming call should not be maintained.

4. The telecommunication system according to claim **1, *characterized in that*** the context-aware module (CAM) associated to said first device (USER) is adapted to reply to the request for additional information of said action module (AM) by sending context parameters (CP) to said decision module (DM).

5. The telecommunication system according to claim **4, *characterized in that*** said decision module (DM) is adapted to update said contextual knowledge database with the context parameters (CP) received from said action module (AM).

6. The telecommunication system according to claim **1, *characterized in that*** said decision logic (DL) is associated to said first device (USER).

7. The telecommunication system according to claim **1, *characterized in that*** said decision logic (DL) is associated to said telecommunication network (TN).

## Patentansprüche

1. Ein Telekommunikationssystem, umfassend ein Telekommunikationsnetzwerk (TN), das mit einer Vielzahl von Telekommunikationsvorrichtungen gekoppelt ist, die ausgelegt sind zum Empfangen eingehender Anrufe, wobei besagtes Telekommunikationsnetzwerk ein Anrufweiterleitungsmodul (CFM) einschließt, das ausgelegt ist zum Umleiten eines eingehenden Anrufs, der für eine erste Vorrichtung (USER) von besagter Vielzahl zu einer zweiten Vorrichtung von besagter Vielzahl von Telekommunikationsvorrichtungen bestimmt ist,
wobei besagtes Telekommunikationssystem weiterhin umfasst eine Entscheidungslogik (DL), die gekoppelt ist mit besagtem Anrufweiterleitungsmodul (CFM) und mit einem kontextsensitiven Modul (CAM), das verbunden ist mit besagter ersten Vorrichtung (USER),
wobei besagtes kontextsensitive Modul (CAM) ausgelegt ist zum Abrufen kontextueller Information (CI) aus dem Kontext, wobei besagte erste Vorrichtung
besagte Entscheidungslogik (DL) ist, die ein Entscheidungsmodul (DM) umfasst, das ausgelegt ist zum Empfangen von Kontextparametern (CP) von besagtem kontextsensitiven Modul und zum Entscheiden mittels dieser, ob und zu welcher zweiten Vorrichtung von besagter Vielzahl von Telekommunikationsvorrichtungen besagter eingehender Anruf weitergeleitet werden soll, und
wobei besagte Entscheidungslogik weiterhin umfasst ein Aktionsmodul (AM), das ausgelegt ist zum Steuern (FW) besagten Anrufweiterleitungsmoduls zum Umleiten besagten eingehenden Anrufs zu besagter zweiten Vorrichtung besagter Vielzahl von Telekommunikationsvorrichtungen,
***dadurch gekennzeichnet, dass*** besagtes Entscheidungsmodul (DM) mit einer Kontextwissen-Datenbank bereitgestellt wird, die Information enthält, die mit verschiedenen Vorrichtungen besagter Vielzahl von Telekommunikationsvorrichtungen verbunden ist und die ausgelegt ist zum Abbilden der Kontextparameter (CP), die von besagtem kontextsensitiven Modul (CAM) empfangen worden sind, auf besagte Kontextwissen-Datenbank und zum Ableiten daraus der Identität der besagten zweiten Vorrichtung,
**und *dadurch, dass,*** wenn besagte Kontextparameter (CP) nicht mittels des Entscheidungsmoduls (DM) auf besagte Kontextwissen-Datenbank abgebildet werden können, besagtes Aktionsmodul (AM) ausgelegt ist zum Anfordern (UC) zusätzlicher Information von besagter ersten Vorrichtung (USER).

2. Telekommunikationssystem nach Anspruch **1, *dadurch gekennzeichnet,* dass** besagtes Entscheidungsmodul (DM) weiterhin ausgelegt ist zum Erkennen von Änderungen in den Kontextparametern (CP), die von besagtem kontextsensitiven Modul (CAM) erhalten werden, und zum Entscheiden damit, ob die Umleitung besagten eingehenden Anrufs aufrechterhalten werden soll oder zu welcher dritten Vorrichtung von besagter Vielzahl von Telekommunikationsvorrichtungen besagter eingehender Anruf umgeleitet werden soll.

3. Telekommunikationssystem nach Anspruch **2, *dadurch gekennzeichnet, dass*** besagtes Aktionsmodul (AM) ausgelegt ist zum Steuern (FW) besagten Anrufsweiterleitungsmoduls (CFM) zum Unterbrechen der Umleitung besagten eingehenden Anrufs, wenn besagtes Entscheidungsmodul (DM) entschieden hat, dass die Umleitung besagten eingehenden Anrufs nicht aufrechterhalten werden soll.

4. Telekommunikationssystem nach Anspruch **1, *dadurch gekennzeichnet, dass*** das kontextsensitive Modul (CAM), das mit besagter ersten Vorrichtung (USER) verbunden ist, ausgelegt ist zum Beantworten der Anforderung von zusätzlicher Information von besagtem Aktionsmodul (AM) durch Senden von Kontextparametern (CP) an besagtes Entscheidungsmodul (DM).

5. Telekommunikationssystem nach Anspruch **4, *dadurch gekennzeichnet, dass*** besagtes Entscheidungsmodul (DM) ausgelegt ist zum Aktualisieren besagter Kontextwissen-Datenbank mit den Kontextparametern (CP), die von besagtem Aktionsmodul (AM) empfangen werden.

6. Telekommunikationssystem nach Anspruch **1, *dadurch gekennzeichnet, dass*** besagte Entscheidungslogik (DL) mit besagter ersten Vorrichtung (USER) verbunden ist.

7. Telekommunikationssystem nach Anspruch **1, *dadurch gekennzeichnet, dass*** besagte Entscheidungslogik (DL) verbunden ist mit besagtem Telekommunikationsnetzwerk (TN).

## Revendications

1. Système de télécommunication comprenant un réseau de télécommunication (TN) couplé à une pluralité de dispositifs de télécommunication adaptés pour recevoir des appels entrants, ledit réseau de télécommunication comprenant un module de transfert d'appel (CFM) adapté pour rediriger un appel entrant destiné à un premier dispositif (USER) parmi ladite pluralité de dispositifs de télécommunication vers un deuxième dispositif parmi ladite pluralité de dispositifs de télécommunication,
ledit système de télécommunication comprenant en outre une logique de décision (DL) couplée audit module de transfert d'appel (CFM) et à un module sensible au contexte (CAM) associé audit premier dispositif (USER),
ledit module sensible au contexte (CAM) étant adapté pour récupérer des informations contextuelles (Cl) à partir du contexte dans lequel se trouve ledit premier dispositif,
ladite logique de décision (DL) comprenant un module de décision (DM) adapté pour recevoir des paramètres de contexte (CP) provenant dudit module sensible au contexte et pour décider avec celui-ci si ledit appel entrant doit être redirigé et vers quel deuxième dispositif parmi ladite pluralité de dispositifs de télécommunication ledit appel entrant doit être redirigé, et
ladite logique de décision comprenant en outre un module d'action (AM) adapté pour commander (FW) ledit module de transfert d'appel afin de rediriger ledit appel entrant vers ledit deuxième dispositif parmi ladite pluralité de dispositifs de télécommunication,
***caractérisé en ce que*** ledit module de décision (DM) est doté d'une base de données de connaissances contextuelles contenant des informations associées à des dispositifs distincts parmi ladite pluralité de dispositifs de télécommunication et est adapté pour mettre en correspondance les paramètres de contexte (CP) provenant dudit module sensible au contexte (CAM) avec ladite base de données de connaissances contextuelles et pour en déduire l'identité dudit deuxième dispositif,
***et en ce que,*** lorsque lesdits paramètres de contexte (CP) ne peuvent pas être mis en correspondance par le module de décision (DM) avec ladite base de données de connaissances contextuelles, ledit module d'action (AM) est adapté pour demander (UC) des informations supplémentaires audit premier dispositif (USER).

2. Système de télécommunication selon la revendication **1, *caractérisé en ce que*** ledit module de décision (DM) est en outre adapté pour détecter des changements dans les paramètres de contexte (CP) provenant dudit module sensible au contexte (CAM) et pour décider avec celui-ci si la redirection dudit appel entrant doit être maintenue ou vers quel troisième dispositif parmi ladite pluralité de dispositifs de télécommunication ledit appel entrant doit être redirigé.

3. Système de télécommunication selon la revendication **2, *caractérisé en ce que*** ledit module d'action (AM) est adapté pour commander (FW) ledit module de transfert d'appel (CFM) pour arrêter la redirection dudit appel entrant lorsque ledit module de décision (DM) a décidé que la redirection dudit appel entrant ne doit pas être maintenue.

4. Système de télécommunication selon la revendication **1, *caractérisé en ce que*** le module sensible au contexte (CAM) associé audit premier dispositif (USER) est adapté pour répondre à la demande d'informations supplémentaires dudit module d'action (AM) en envoyant des paramètres de contexte (CP) audit module de décision (DM).

5. Système de télécommunication selon la revendication **4, *caractérisé en ce que*** ledit module de décision (DM) est adapté pour mettre à jour ladite base de données de connaissances contextuelles avec les paramètres de contexte (CP) provenant dudit module d'action (AM).

6. Système de télécommunication selon la revendication **1, *caractérisé en ce que*** ladite logique de décision (DL) est associée audit premier dispositif (USER).

7. Système de télécommunication selon la revendication **1, *caractérisé en ce que*** ladite logique de décision (DL) est associée audit réseau de télécommunication (TN).
